# EUROPÄISCHE PATENTSCHRIFT

(11) **EP 1 640 658 B1**
(45) Veröffentlichungstag und Bekanntmachung des Hinweises auf die Patenterteilung: **07.10.2009**
(21) Anmeldenummer: 05017738.5
(22) Anmeldetag: 16.08.2005
(51) Int. Cl.: F21V 14/08, F21S 8/10

(54) **Scheinwerfer mit mehreren Blenden**
Headlight with several dimmer screens
Projecteur avec plusieurs écrans

(30) Priorität: 22.09.2004 DE 102004045881
(43) Veröffentlichungstag der Anmeldung: 29.03.2006
(73) Patentinhaber: Automotive Lighting Reutlingen GmbH, 72762 Reutlingen (DE)
(72) Erfinder: Brendle, Matthias, 72074 Tübingen (DE); Hamm, Michael, Dr., 72800 Eningen u.A. (DE)
(74) Vertreter: Wörz, Volker Alfred

(56) Entgegenhaltungen:
- EP-A- 1 201 989
- EP-A- 1 308 669
- EP-A1- 1 139 017
- EP-A2- 0 294 589
- EP-A2- 1 010 935
- DE-A1- 3 528 820
- DE-A1- 4 318 315
- DE-A1- 19 537 838
- FR-A1- 2 847 655

## Beschreibung

Die vorliegende Erfindung betrifft einen Scheinwerfer, insbesondere für ein Kraftfahrzeug, mit einem Reflektor, der von einer Lichtquelle ausgesandtes Licht reflektiert, und mit einer Abblendvorrichtung, die zur Erzeugung einer Hell-Dunkel-Grenze, vorzugsweise durch Projektion mittels einer Linse, eine Blendenkontur aufweist.

Derartige Scheinwerfer sind aus dem Stand der Technik bekannt. In der DE 199 09 413 A1 ist ein Scheinwerfer beschrieben, der zur Realisierung der Blendenkontur eine Blendenwelle aufweist, auf deren Mantelfläche verschiedene Brennlinien angeordnet sind. Die verschiedenen Brennlinien können jeweils durch eine Verstellung der Blendenwelle zwischen unterschiedlichen Drehstellungen zur Bildung unterschiedlicher Hell-Dunkel-Grenzen ausgewählt werden. Nachteilig ist hierbei insbesondere der hohe Platzbedarf der Blendenwelle innerhalb des Scheinwerfers. Ferner kann sich beim Verstellen der Blendenwelle insbesondere zwischen zwei benachbarten Drehstellungen auch eine unerwünschte Änderung der Lichtverteilung oder sogar eine Blendung ergeben.

Ein weiterer Nachteil bekannter Scheinwerfer liegt in der geringen Zahl verschiedener Blendenkonturen, die mittels der Blendenwelle realisierbar sind.

Bei anderen bekannten Systemen ist eine Blende je Leuchtfunktion des Scheinwerfers wie z.B. Abblendlicht oder Fernlicht usw. vorgesehen, wobei der Wechsel zwischen diesen Blenden meist aufwendig und störungsanfällig ist und es auch hier insbesondere bei einem Blendenwechsel zu einer unerwünschten Änderungen der Lichtverteilung oder sogar zur Blendung kommen kann.

EP-A-1201989 offenbart die Merkmale des Oberbegriffs des Anspruchs 1.

Demgemäß ist es Aufgabe der vorliegenden Erfindung, einen Scheinwerfer der eingangs genannten Art dahingehend zu verbessern, dass ein einfacher Wechsel der Blendenkontur ohne unerwünschte Beeinträchtigung der Lichtverteilung des Scheinwerfers bei gleichzeitig hoher Flexibilität und einer Vielzahl möglicher Blendenkonturen mit einfachen Mitteln möglich ist.

Diese Aufgabe wird bei einem Scheinwerfer der eingangs genannten Art durch die Merkmalskombination des Anspruchs 1 gelöst.

Vorteile der Erfindung

Beispielsweise kann eine erste, fest im Strahlengang des Scheinwerfers angeordnete Blende vorgesehen sein und eine zweite Blende, die relativ zu der ersten Blende bewegbar ist.

Bei dieser Konfiguration ist es möglich, die bewegbare Blende derart relativ zu der festen Blende zu bewegen bzw. anzuordnen, dass die Blendenkontur teilweise durch einen Bereich der ersten, feststehenden Blende gebildet ist und teilweise durch einen Bereich der zweiten Blende. Auf diese Weise kann durch weiteres Bewegen der zweiten Blende gezielt ein bestimmter Teil der Blendenkontur verändert werden, während ein anderer Teil der Blendenkontur, der durch die feststehende Blende gebildet ist, sich nicht verändert.

Somit ist es möglich, die Blendenkontur mit der erfindungsgemäßen Abblendvorrichtung gezielt abschnittsweise zu verändern, ohne dass die aus dem Stand der Technik bekannten unerwünschten Änderungen der Lichtverteilung auftreten.

Anstelle der vorstehend beschriebenen Kombination aus einer feststehenden Blende und einer relativ dazu bewegbaren Blende ist es auch möglich, keine feststehende Blende und/oder mehr als eine bewegbare Blende vorzusehen.

Insbesondere bei der Verwendung einer Vielzahl von relativ zueinander bewegbaren Blenden ist eine große Kombinationsvielfalt hinsichtlich der resultierenden Blendenkontur gegeben, wobei auch die Anzahl der Blenden variiert werden kann, welche gleichzeitig zu Bildung der Blendenkontur beitragen.

Bei einer vorteilhaften Ausführungsform der Erfindung ist vorgesehen, dass die Blenden bezogen auf eine optische Achse des Scheinwerfers hintereinander angeordnet sind. Eine derartige Anordnung der vorzugsweise flach ausgebildeten Blenden ermöglicht den Aufbau einer relativ kleinbauenden Abblendvorrichtung.

Beispielsweise können zwei Blenden nebeneinander angeordnet sein, so dass jede der Blenden jeweils nur einen Teil der Blendenkontur beeinflussen kann.

Eine Anordnung der Blenden hintereinander ermöglicht dagegen eine Einstellung der erfindungsgemäßen Abblendvorrichtung derart, dass beide Blenden jeweils die ganze Blendenkontur oder zumindest einen wesentlichen Teil der gesamten Blendenkontur beeinflussen können.

Gemâß der Erfindung ist es vorgesehen, dass mindestens eine der Blenden um eine Drehachse drehbar ist, die im wesentlichen parallel zu einer optischen Achse des Scheinwerfers verläuft. Dadurch ist es beispielsweise auch bei der bereits beschriebenen Konfiguration mit hintereinander angeordneten Blenden möglich, nur einen Teil der Blendenkontur wie beispielsweise einen seitlichen Bereich bzw. einen Randbereich der Blendenkontur mit der drehbaren Blende zu bilden bzw. zu beeinflussen, während die weiteren Abschnitte der drehbaren Blende beispielsweise in einen von einer feststehenden Blende abgeschatteten Bereich gedreht sind und somit nicht zur Bildung der Blendenkontur beitragen.

Besonders vorteilhaft ist eine drehbare Befestigung einer Blende an einem Rand des Reflektors des erfindungsgemäßen Scheinwerfers. Alternativ hierzu kann die Befestigung einer drehbaren Blende auch an einer feststehenden Blende erfolgen, die permanent einen Teil des Strahlengangs des Scheinwerfers abschattet. Hierdurch ist es u.a. möglich, eine Drehachse für die drehbare Blende vorzusehen, welche sich in der Nähe der optischen Achse des Scheinwerfers befindet.

Bei einer weiteren vorteilhaften Variante der vorliegenden Erfindung ist mindestens eine der Blenden um eine Drehachse drehbar, die im wesentlichen senkrecht zu einer optischen Achse des Scheinwerfers verläuft, so dass die Blende beispielsweise in den Strahlengang des Scheinwerfers hineinbewegt oder auch ganz aus dem Strahlengang herausbewegt werden kann, beispielsweise um eine Fernlichtfunktion oder dergleichen zu realisieren.

Erfindungsgemäß ist es bei dieser Variante auch möglich, gleichzeitig mehrere Blenden und/oder weitere Komponenten der Abblendvorrichtung in der vorstehend beschriebenen Art und Weise zu drehen. Die zur optischen Achse des Scheinwerfers im wesentlichen senkrecht verlaufende Drehachse kann hierbei beispielsweise horizontal oder auch vertikal verlaufen, so dass ein Hineinbewegen in den Strahlengang oder auch ein Herausbewegen aus dem Strahlengang von einer Seite des Scheinwerfers oder auch von oben bzw. unten erfolgen kann.

Bei einer anderen sehr vorteilhaften Ausführungsform des erfindungsgemäßen Scheinwerfers ist mindestens eine der Blenden durch eine Translation in einer Ebene verschiebbar, wobei die Ebene im wesentlichen senkrecht zu einer optischen Achse des Scheinwerfers verläuft.

Bei einer weiteren vorteilhaften Ausführungsform der Erfindung ist mindestens ein Antrieb zur Bewegung mindestens einer Blende vorgesehen.

Bei dem Antrieb kann es sich erfindungsgemäß vorzugsweise um einen Elektromotor oder auch um einen Elektromagnet handeln, wobei der Elektromotor vorteilhaft als Gleichstrommotor (DC-Motor) oder auch als elektronisch kommutierter Motor (EC (electrically commutated)-Motor oder als Schrittmotor ausgebildet sein kann.

Besonders vorteilhaft ist der Antrieb bei einer Erfindungsvariante an einer Außenseite des Reflektors angeordnet und befindet sich demnach nicht im Strahlengang des Scheinwerfers. Bei dieser Anordnung ist auch im Falle der Verwendung einer Klarglasscheibe zur frontalen Abdeckung des Scheinwerfers ein ästhetischer Eindruck des Scheinwerfers nicht beeinträchtigt, da der Antrieb in dieser Einbaulage von außen nicht sichtbar ist.

Alternativ hierzu ist eine Anordnung des Antriebs auch im Bereich einer feststehenden Blende denkbar, die permanent einen Teil des Strahlengangs verdeckt. In diesem Fall ist es beispielsweise möglich, den Antrieb auf einer reflektorabgewandten Seite der feststehenden Blende vorzusehen, so dass eine unnötige thermische Belastung des Antriebs aufgrund einer direkten Bestrahlung durch die Lichtquelle vermieden wird.

Auch bei dieser Konfiguration kann eine Beeinträchtigung des ästhetischen Eindrucks des Scheinwerfers durch die Sichtbarkeit des Antriebs von außen vermieden werden, indem der Antrieb auf der reflektorabgewandten Seite der feststehenden Blende so positioniert wird, dass sich in einer aus allen möglichen Betrachtungspositionen auf den Antrieb deutenden Sichtlinie z.B. die Linse des Scheinwerfers befindet. Hierbei wird die Brechungswirkung der Linse vorteilhaft ausgenutzt, um eine Sichtbarkeit des Antriebs von außen zumindest zu verringern. Bei entsprechender, an die Blende und den Reflektor angepasster insbesondere farblicher Ausbildung eines den Antrieb aufnehmenden Gehäuses wird der ästhetische Eindruck des Scheinwerfers beim Anblick von außen nicht beeinträchtigt.

Gemäß einer weiteren sehr vorteilhaften Ausführungsform der vorliegenden Erfindung sind mehrere Blenden gleichzeitig mit einem Antrieb bewegbar. Auf diese Weise ist es möglich, eine komplexe Blendenkontur zu bilden, die mithilfe einer Mehrzahl von hintereinander oder auch nebeneinander angeordneten Blenden realisiert wird.

Insbesondere ist dadurch auch ein Übergang von einer ersten Blendenkontur zu einer weiteren Blendenkontur möglich, bei dem durch das erfindungsgemäße gleichzeitige Zusammenwirken mehrere Blenden zur Bildung der Blendenkontur keine unerwünschten Lichtverteilungen oder sogar eine Blendung auftreten.

Gemäß der Erfindung weist mindestens eine Blende eine Kulisse auf, in die ein Kurbelbolzen des Antriebs eingreifen kann. In diesem Fall ist der Antrieb beispielsweise als Gleichstrommotor mit Untersetzungsgetriebe ausgebildet, das den Kurbelbolzen mit geringer Drehzahl ansteuert. Der Kurbelbolzen greift in die Kulisse der vorzugsweise drehbar angeordneten Blende ein und bewegt damit die Blende, wobei die resultierende Bewegung der Blende in diesem Fall abhängig ist von einem Abstand der Drehachse der Blende zu der Kulisse, von der Drehzahl des Gleichstrommotors und von der Form der Kulisse selbst.

Demgemäß kann durch eine entsprechende Ausbildung der Kulisse und durch die Wahl der Geometrie der Blende bzw. des Kurbelbolzens sowie durch die Anordnung des Antriebs bzw. der Kulisse relativ zur Drehachse der Blende eine gewünschte Bewegung der Blende genau vorgegeben werden.

Besonders vorteilhaft können insbesondere hintereinander angeordnete bewegbare Blenden, die jeweils mit einer derartigen Kulisse ausgestattet sind, gleichzeitig mit einem Antrieb bewegt werden, wobei der Kurbelbolzen des Antriebs gleichzeitig in die jeweilige Kulisse der Blenden eingreift.

Eine besonders vorteilhafte Relativbewegung der einzelnen Blenden zueinander während des Antriebs mit z.B. einem einzigen Kurbelbolzen kann insbesondere durch eine unterschiedliche Ausbildung der Kulissen der verschiedenen Blenden erzielt werden.

Eine weitere sehr vorteilhafte Ausführungsform der Erfindung sieht vor, dass die Blenden, insbesondere in einem Bereich der zur Bildung der Blendenkontur der Abblendvorrichtung beiträgt, jeweils unterschiedlich geformt sind. Eine derartige Ausbildung der Blenden ist insbesondere bei hintereinander angeordneten bewegbaren Blenden sehr vorteilhaft, weil hierdurch die Anzahl der realisierbaren Blendenkonturen erfindungsgemäß noch gesteigert werden kann, indem jeweils eine andere Blende in den Strahlengang des Scheinwerfers bewegt wird und damit zur Bildung der Blendenkontur beitragen kann.

Gemäß einer anderen sehr vorteilhaften Ausführungsform der vorliegenden Erfindung ist die Lichtquelle als Halogenlampe und/oder als Gasentladungslampe und/oder als Leuchtdiode ausgebildet. Eine Verwendung mehrerer Lichtquellen wie z.B. mehrerer Halogenlampen und/oder Gasentladungslampen und/oder insbesondere mehrerer Leuchtdioden ist ebenso möglich.

Eine weitere sehr vorteilhafte Ausführungsform des erfindungsgemäßen Scheinwerfers sieht vor, dass die Blenden aus Blech bestehen. Solche Blenden sind einfach und kostengünstig herstellbar, beispielsweise durch Stanzen. Die Kulissen der Blenden können in demselben Fertigungsprozess d.h. ebenfalls durch Stanzen, angefertigt werden.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind.

Es zeigen:
- Fig. 1a: eine Frontalansicht eines erfindungsgemäßen Scheinwerfers,
- Fig. 1b: einen teilweisen Querschnitt des Scheinwerfers aus Fig. 1a entlang der Linie A-A mit Blick in Pfeilrichtung,
- Fig. 1c: eine perspektivische Ansicht des Scheinwerfers aus Fig. 1a,
- Fig. 2: einen teilweisen Querschnitt einer weiteren Ausführungsform des erfindungsgemäßen Scheinwerfers,
- Fig. 3: eine Explosionszeichnung des Scheinwerfers gemäß Fig. 1a,
- Fig. 4a: eine Frontalansicht des Scheinwerfers gemäß Fig. 1a in einem ersten Betriebszustand,
- Fig. 4b: eine Frontalansicht des Scheinwerfers gemäß Fig. 1a in einem zweiten Betriebszustand,
- Fig. 4c: eine Frontalansicht des Scheinwerfers gemäß Fig. 1a in einem dritten Betriebszustand, und
- Fig. 4d: eine Frontalansicht des Scheinwerfers gemäß Fig. 1a in einem vierten Betriebszustand.

### Beschreibung der Ausführungsbeispiele

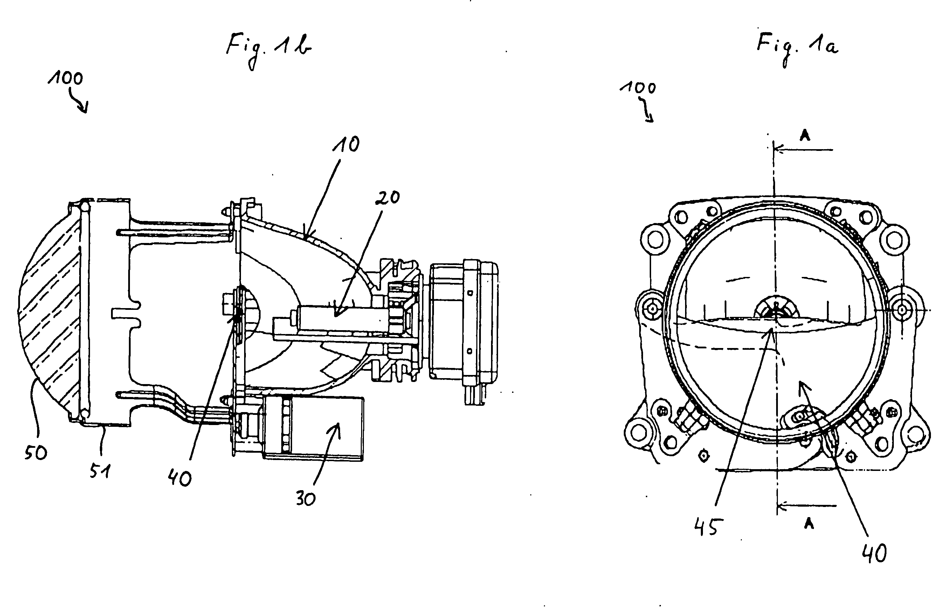

In Fig. 1a ist eine Frontalansicht einer ersten Ausführungsform des erfindungsgemäßen Scheinwerfers 100 abgebildet, der eine in seinem Strahlengang angeordnete Abblendvorrichtung 40 aufweist. Die Abblendvorrichtung 40 weist mehrere in Fig. 1a nicht näher dargestellte Blenden auf, die bezogen auf eine in Fig. 1a senkrecht zur Zeichenebene verlaufende optische Achse des Scheinwerfers 100 im wesentlichen hintereinander angeordnet sind und die zusammen eine Blendenkontur 45 bilden.

Fig. 1b zeigt den Scheinwerfer 100 im Querschnitt längs der Linie A-A aus Fig. 1a mit Blick in Pfeilrichtung. Wie aus Fig. 1b ersichtlich, weist der Scheinwerfer 100 eine Lichtquelle 20 auf, die beispielsweise als Gasentladungslampe ausgebildet ist und deren Licht von dem Reflektor 10 in Fig. 1b nach links reflektiert wird.

Ein Teil des aus dem Reflektor 10 austretenden Lichts trifft auf die Abblendvorrichtung 40 und wird von dieser zurückgestreut. Der größte Teil des nicht auf die Abblendvorrichtung 40 treffenden Teils des aus dem Reflektor 10 austretenden Lichts tritt durch die in einer Halterung 51 gelagerte Linse 50 und wird von dieser gebündelt, bevor er aus dem Scheinwerfer 100 austritt.

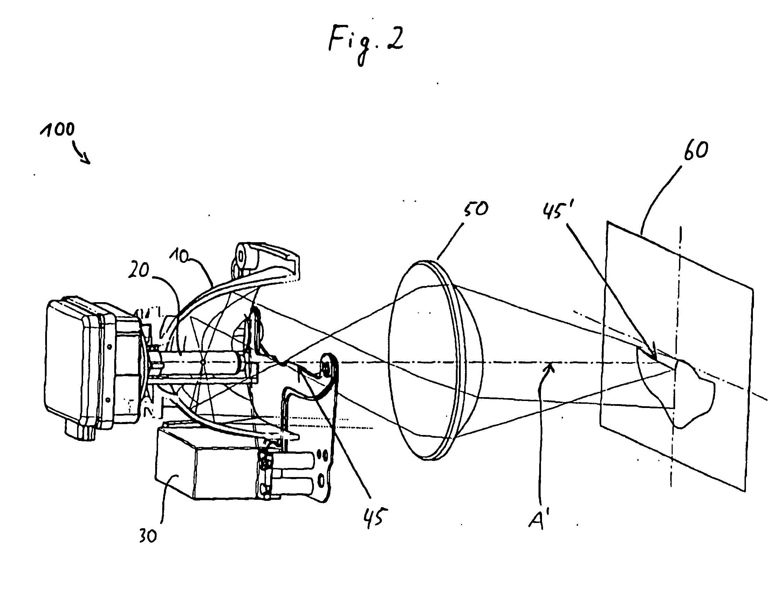

Durch die von der Abblendvorrichtung 40 realisierte teilweise Abschattung des aus dem Reflektor 10 austretenden Lichts ergibt sich die in Fig. 2 auf dem Projektionsschirm 60 dargestellte Hell-Dunkel-Grenze 45', deren Form von der Blendenkontur 45 abhängt. Präziser ausgedrückt stellt die Hell-Dunkel-Grenze 45' eine Projektion der Blendenkontur 45 der Abblendvorrichtung dar.

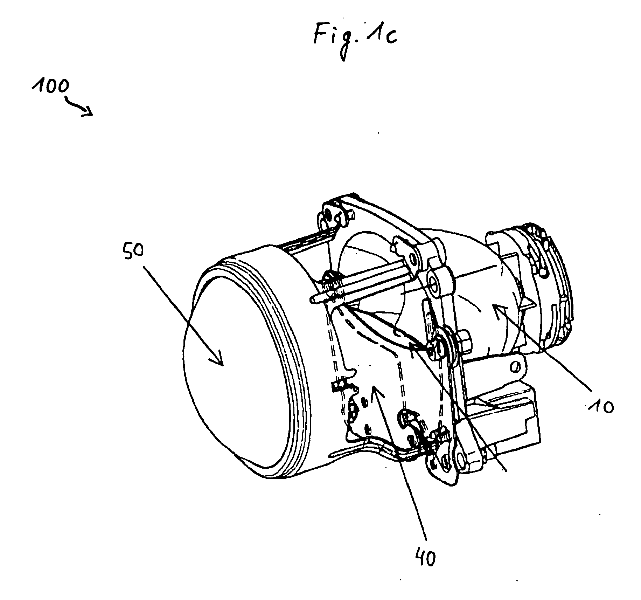

Eine perspektivische Ansicht des erfindungsgemäßen Scheinwerfers 100 ist in Fig. 1c dargestellt.

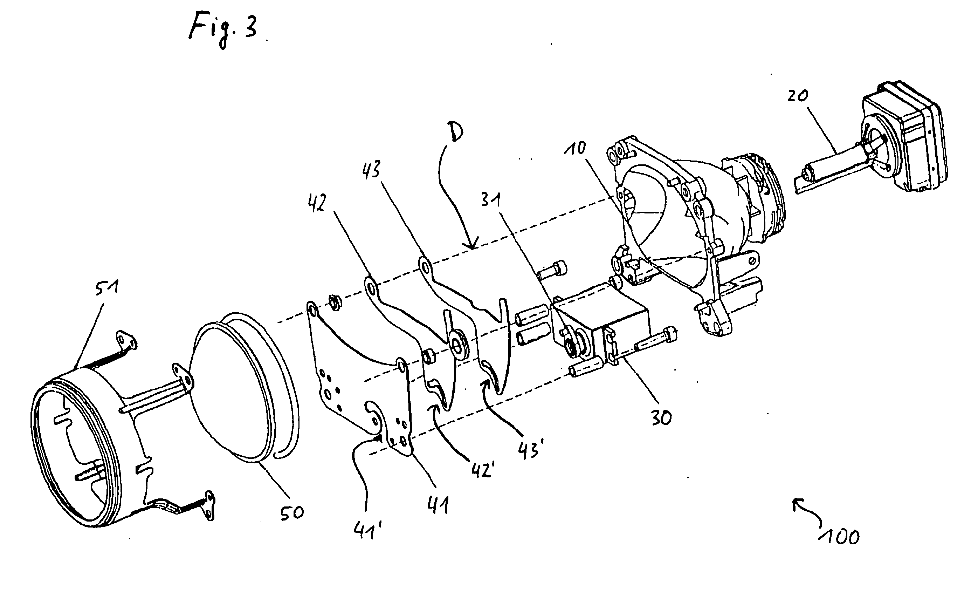

Zur Erzeugung einer komplex geformten und variablen Hell-Dunkel-Grenze 45' (Fig. 2) weist die Abblendvorrichtung 40 mehrere Blenden auf, welche nachfolgend mit Bezug auf Fig. 3 beschrieben sind.

Wie aus Fig. 3 ersichtlich, sind bei dem erfindungsgemäßen Scheinwerfer 100 insgesamt 3 verschiedene Blenden 41, 42, 43 vorgesehen. Hierbei ist die erste Blende 41 fest mit dem Reflektor 10 verbunden und derart im Strahlengang des Scheinwerfers 100 angeordnet, dass sie etwa die halbe Austrittsöffnung des Reflektors 10 permanent verdeckt, vgl. auch Fig. 1a.

Die Blenden 42, 43 (Fig. 3) sind im Gegensatz zur ersten Blende 41 drehbar im Strahlengang des Scheinwerfers 100 angeordnet, wobei beide Blenden 42, 43 dieselbe Drehachse D aufweisen, die etwa parallel zur optischen Achse A' (vgl.

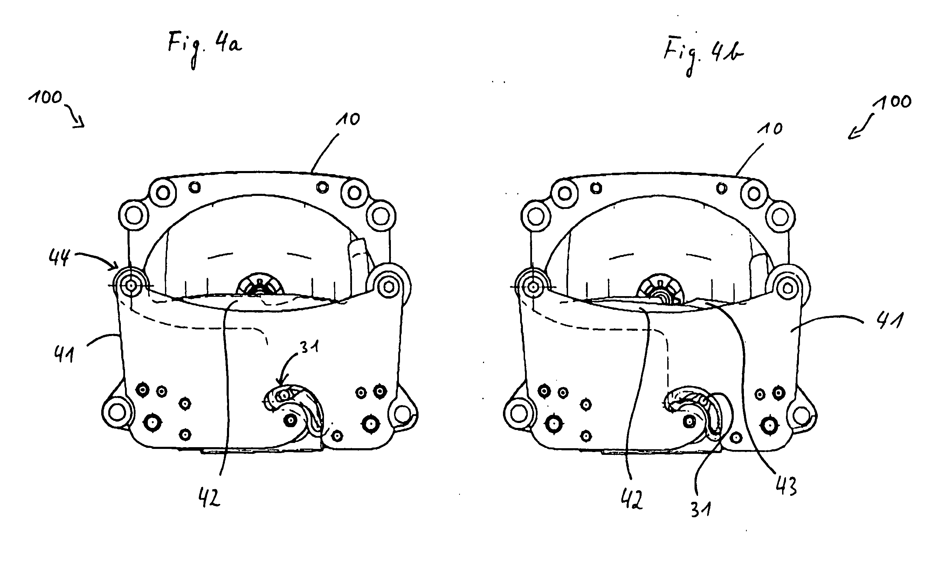

Fig. 2) des Scheinwerfers 100 verläuft. Eine Befestigung der Blenden 42, 43 an dem Reflektor 10 erfolgt dabei an dem Drehpunkt 44 gemäß Fig. 4a.

Durch die aus Fig. 3 ersichtliche Anordnung der Blenden 41, 42, 43 hintereinander im Strahlengang des Scheinwerfers 100 können alle drei Blenden 41, 42, 43 gleichzeitig zur Bildung der Blendenkontur 45, vgl. Fig. 2., beitragen.

Das Zusammenwirken der Blenden 41, 42, 43 kann dabei erfindungsgemäß beispielsweise derart erfolgen, dass jeweils ein Abschnitt der Blendenkontur 45 von einer anderen Blende 41, 42, 43 gebildet ist.

In den Fig. 4a bis 4d sind zur Veranschaulichung vier verschiedene Betriebszustände des erfindungsgemäßen Scheinwerfers 100 dargestellt.

Bei dem Betriebszustand nach Fig. 4a wird die Blendenkontur 45 (Fig. 2) im wesentlichen durch die feststehende Blende 41 und die drehbare Blende 42 gebildet, während die drehbare Blende 43 zumindest innerhalb des Strahlengangs des Scheinwerfers 100 komplett von den Blenden 41 bzw. 42 verdeckt ist und damit nicht zur Blendenkontur 45 (Fig. 2) der Abblendvorrichtung 40 beitragen kann.

Wie aus Fig. 4a weiter ersichtlich, wird die Blendenkontur 45 der Abblendvorrichtung 40 in den Randbereichen der Reflektoröffnung durch die feststehende Blende 41 gebildet, wohingegen die Blendenkontur 45 in einem mittleren Bereich der Reflektoröffnung von der drehbaren Blende 42 gebildet ist. Der in Fig. 4a gezeigte Betriebszustand des Scheinwerfers entspricht der Funktion eines Nebellichts oder Stadtlichts.

Bei dem Betriebszustand nach Fig. 4b wird die Blendenkontur 45 (Fig. 2) gleichzeitig durch alle drei Blenden 41, 42, 43 gebildet. Vergleichbar zu dem in Fig. 4a abgebildeten Betriebszustand wird die Blendenkontur 45 gemäß Fig. 4b in den Randbereichen der Reflektoröffnung durch die feststehende Blende 41 gebildet, wohingegen die Blendenkontur 45 in einem mittleren Bereich der Reflektoröffnung von den beiden drehbaren Blenden 42, 43 gebildet ist. Der in Fig. 4b gezeigte Betriebszustand des Scheinwerfers 100 entspricht der Funktion eines Abblendlichts, wie es beispielsweise bei der Fahrt auf einer Landstraße einsetzbar ist.

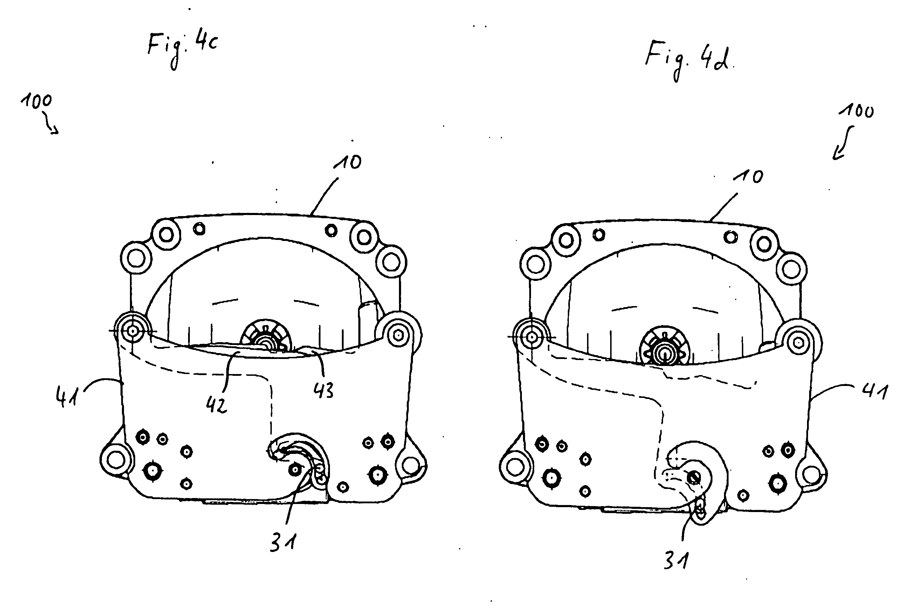

Bei dem dritten Betriebszustand des erfindungsgemäßen Scheinwerfers 100, der in Fig. 4c gezeigt ist, wird die Blendenkontur 45 (Fig. 2) ebenso wie in Fig. 4b gleichzeitig durch alle drei Blenden 41, 42, 43 gebildet. Der in Fig. 4c gezeigte Betriebszustand des Scheinwerfers 100 entspricht der Funktion eines sog. Autobahnlichts. Wie aus Fig. 4c ersichtlich, ist zur Realisierung des Autobahnlichts die Blende 43 geringfügig tiefer angeordnet als bei dem Betriebszustand für das Abblendlicht nach Fig. 4b. Bei dem Autobahnlicht schiebt sich die Position der Hell-Dunkel-Grenze - verglichen mit z.B. dem Abblendlicht - in größere Entfernung vor das Fahrzeug, wodurch sich eine erhöhte Reichweite des Autobahnlichts ergibt. Darüber hinaus ist bei dem Autobahnlicht das Maximum der Lichtverteilung erhöht.

In dem vierten Betriebszustand des erfindungsgemäßen Scheinwerfers 100 nach Fig. 4d ist die Blendenkontur 45 der Abblendvorrichtung 40 allein durch die feststehende Blende 41 gebildet, so dass sich in diesem Betriebszustand eine kleinstmögliche Abschattung des aus dem Reflektor 10 austretenden Lichts ergibt. Demgemäß entspricht der in Fig. 4d gezeigte Betriebszustand des Scheinwerfers 100 der Funktion eines Fernlichts.

Bei dem in den Fig. 4a bis 4d gezeigten Scheinwerfer 100 wird der Wechsel zwischen den Betriebszuständen durch eine Bewegung der drehbaren Blenden 42, 43 relativ zu der feststehenden Blende 41 und ggf. auch relativ zueinander vorgenommen. Hierzu ist an einer Außenseite des Reflektors 10 der Antrieb 30 (Fig. 1c) vorgesehen, der als Elektromotor mit einem Untersetzungsgetriebe ausgebildet ist und einen Kurbelbolzen 31 (Fig. 3) antreibt.

Der Kurbelbolzen 31 greift in die dafür vorgesehenen Kulissen 42', 43' der Blenden 42, 43, vgl. Fig. 3, ein und bewegt die im Punkt 44 (Fig. 4a) drehbar gelagerten Blenden 42, 43 entsprechend. Die Drehbewegung der Blenden 42, 43 wird hierbei insbesondere von der Winkelgeschwindigkeit des Kurbelbolzens 31, dem Abstand des Kurbelbolzens 31 von der Drehachse D und von der Form der jeweiligen Kulisse 42', 43' bestimmt.

Durch die Verwendung unterschiedlich geformter Kulissen 42', 43' bei den Blenden 42, 43 ist es demnach möglich, beide Blenden 42, 43 gemeinsam mit einem Antrieb 30 bzw. dessen Kurbelbolzen 31 anzutreiben und gleichzeitig eine unterschiedliche Drehbewegung der Blenden 42, 43 zu realisieren.

Um die Bewegung des Kurbelbolzens 31 nicht zu behindern, weist die feststehende Blende 41 wie in Fig. 3 abgebildet ebenfalls eine kulissenartige Ausnehmung 41' auf.

Zur Realisierung der vier vorstehend anhand der Fig. 4a bis 4d beschriebenen Betriebszustände wird der Kurbelbolzen 31 von dem Antrieb 30 aus einer ersten Winkelposition nacheinander in weitere Winkelpositionen bewegt, wobei sich aufgrund der Formgebung der Kulissen 42', 43' die jeweils in den Fig. 4a bis 4d abgebildete Konstellation der Blenden 41, 42, 43 ergibt, die zusammen die Blendenkontur 45 bilden.

In der ersten Winkelposition befindet sich der Kurbelbolzen 31 in Fig. 4a bezogen auf eine Drehachse des Antriebs 30 etwa in einer elf-Uhr-Position, während er sich bei dem in Fig. 4b gezeigten Betriebszustand etwa in zwei-Uhr-Position befindet. Der in Fig. 4c abgebildete Betriebszustand entspricht etwa einer drei-Uhr-Position des Kurbelbolzens 31, und zur Realisierung der Fernlichtfunktion gemäß Fig. 4d befindet sich der Kurbelbolzen 31 nahezu in einer sechs-Uhr-Position.

Zusätzlich zu der unterschiedlichen Formgebung der Kulissen 42', 43' sind die Blenden 41, 42, 43 insbesondere in ihrem oberen Bereich, d.h. im Bereich der Blendenkontur 45 (Fig. 2), unterschiedlich geformt, so dass mit den einzelnen Blenden 42, 43 jeweils unterschiedlich ausgebildete Abschnitte der Blendenkontur 45 gebildet werden können.

Bei einer weiteren sehr vorteilhaften Ausführungsform der vorliegenden Erfindung sind die Blenden 41, 42, 43 um eine zur optischen Achse A' (Fig. 2) etwa senkrecht verlaufende Achse (nicht gezeigt) drehbar gelagert, so dass die Blenden 41, 42, 43 z.B. seitlich oder auf- bzw. abwärts in den Strahlengang des Scheinwerfers 100 hereinbewegbar bzw. aus dem Strahlengang herausbewegbar sind.

Es ist auch denkbar, die bewegbaren Blenden durch eine Translation in einer Ebene zu verschieben, die sich im wesentlichen senkrecht zur optischen Achse A' erstreckt.

Besonders vorteilhaft bei einer Anordnung mehrerer Blenden 41, 42, 43 entlang der optischen Achse A' hintereinander ist ein möglichst geringer Abstand der einzelnen Blenden 41, 42, 43 zueinander, so dass alle Blenden 41, 42, 43 sich in etwa in derselben Schärfeebene befinden und dementsprechend mit einer jeweils vergleichbaren Bildschärfe als Teil der Hell-Dunkel-Grenze 45' (Fig. 2) abgebildet werden.

Generell sind auch mehr als drei Blenden zur Bildung der Blendenkontur 45 verwendbar, so dass bei dem erfindungsgemäßen Scheinwerfer nahezu beliebig komplexe Blendenkonturen 45 gebildet werden können.

Insbesondere lässt sich mit der erfindungsgemäßen gleichzeitigen Verwendung mehrerer Blenden beim Wechsel zwischen verschiedenen Betriebsarten des Scheinwerfers 100 das Auftreten einer unerwünschten Lichtverteilung oder sogar eine Blendung z.B. des Gegenverkehrs vermeiden.

Darüber hinaus kann bei dem erfindungsgemäßen Scheinwerfer 100 selektiv nur ein Teil der Blendenkontur 45 verändert werden, während die restliche Blendenkontur 45 unverändert bleibt. Somit ist es möglich, einzelne Bereiche der Hell-Dunkel-Grenze 45' zu verstellen, ohne die gesamte Lichtverteilung des Scheinwerfers zu beeinflussen.

Es ist auch denkbar, mehrere Antriebe vorzusehen, die jeweils unterschiedliche Blenden oder Blendengruppen bewegen.

Der Antrieb kann insbesondere als Gleichstrommotor (DC-Motor) oder auch als elektronisch kommutierter Motor (EC (electrically commutated)-Motor) oder auch als Schrittmotor ausgebildet sein. Der Einsatz von Elektromagneten zur Bewegung von Blenden ist ebenso denkbar.

Mit der vorliegenden Erfindung ist ferner eine Blendenkonfiguration realisierbar, die unterschiedliche Betriebszustände für Rechts- bzw. Linksverkehr anbietet. Eine automatische Umschaltung der Blendenkonfiguration zwischen diesen Betriebszuständen ist ebenfalls möglich.

Bei einer Ausbildung der Blenden als Blech-Stanzteile ist eine sehr kostengünstige Fertigung der Blenden erreichbar.

Als Lichtquellen sind neben der beschriebenen Gasentladungslampe auch Halogenlampen bzw. Leuchtdioden einsetzbar.

Gemäß einer weiteren sehr vorteilhaften Ausführungsform der vorliegenden Erfindung können verschiedene Betriebszustände des Scheinwerfers 100 auch durch das Verschieben bzw. Drehen einer Blendenkontur 45 im Strahlengang des Scheinwerfers 100 gebildet werden. Hierbei ist es nicht erforderlich, dass sich die Blendenkontur 45 beim Wechsel zwischen den verschiedenen Betriebszuständen ändert. Beispielsweise ist eine spezielle Blendenkontur, die sich aus einer bewegbaren Blende oder auch aus mehreren bewegbaren Blenden gleichzeitig zusammensetzen kann, je nach der Anordnung der Blendenkontur 45 in dem Scheinwerfer 100 sowohl für einen ersten Betriebszustand wie z. B. ein Nebellicht als auch für einen zweiten Betriebszustand wie z. B. ein Stadtlicht verwendbar. Der Unterschied zwischen dem Nebellicht und dem Stadtlicht besteht hierbei also in einem unterschiedlichen Grad der Abdeckung des Strahlengangs des Scheinwerfers 100, während für beide Betriebszustände dieselbe Blendenkontur 45 verwendbar ist.

## Patentansprüche

1. Scheinwerfer (100), insbesondere für ein Kraftfahrzeug, mit einem Reflektor (10), der von einer Lichtquelle (20) ausgesendetes Licht reflektiert, und mit einer Abblendvorrichtung (40), die zur Erzeugung einer Hell-Dunkel-Grenze (45'), vorzugsweise durch Projektion mittels einer Linse (50), eine Blendenkontur (45) bildet, wobei die Abblendvorrichtung (40) mindestens zwei Blenden (41, 42, 43) aufweist, wobei mindestens eine der Blenden (41, 42, 43) relativ zu der/den anderen Blende(n) um eine im Wesentlichen parallel zu einer optischen Achse (A') des Scheinwerfers (100) verlaufende Drehachse (D) drehbar ist, und wobei mehrere Blenden (41, 42, 43) gleichzeitig zur Bildung der Blendenkontur (45) beitragen, **dadurch gekennzeichnet, dass** die mindestens eine um die Drehachse (D) drehbare Blende (41, 42, 43) eine Kulisse (41', 42', 43') aufweist, in die ein Kurbelbolzen (31) eines Antriebs (30) zum Bewegen der mindestens einen um die Drehachse (D) drehbaren Blende (41, 42, 43) eingreift.

2. Scheinwerfer (100) nach Anspruch 1, **dadurch gekennzeichnet, dass** mehrere Blenden (41, 42, 43) gleichzeitig um die Drehachse (D) drehbar sind, wobei in den drehbaren Blenden (41, 42, 43) Kulissen (41', 42', 43') mit voneinander abweichenden Verläufen ausgebildet sind.

3. Scheinwerfer (100) nach Anspruch 1 oder 2, **dadurch gekennzeichnet, dass** die Blenden (41, 42, 43) bezogen auf die optische Achse (A') des Scheinwerfers (100) hintereinander angeordnet sind.

4. Scheinwerfer (100) nach einem der Ansprüche 1 bis 3, **dadurch gekennzeichnet, dass** der Antrieb (30) an einer Außenseite des Reflektors (10) angeordnet ist.

5. Scheinwerfer (100) nach einem der Ansprüche 1 bis 4, **dadurch gekennzeichnet, dass** der Antrieb (30) als ein Elektromotor und/oder als ein Elektromagnet ausgebildet ist.

6. Scheinwerfer (100) nach einem der Ansprüche 1 bis 5, **dadurch gekennzeichnet, dass** die Kulisse und/oder eine Geometrie des Kurbelbolzens (31) in Abhängigkeit von mit der Abblendvorrichtung (40) zu realisierenden Blendenkonturen (45) ausgebildet ist.

7. Scheinwerfer (100) nach einem der vorstehenden Ansprüche, **dadurch gekennzeichnet, dass** die Blenden (41, 42, 43), insbesondere in einem Bereich, der zur Bildung der Blendenkontur (45) der Abblendvorrichtung (40) beiträgt, jeweils unterschiedlich geformt sind.

8. Scheinwerfer (100) nach einem der vorstehenden Ansprüche, **dadurch gekennzeichnet, dass** die Lichtquelle (20) als Halogenlampe und/oder Gasentladungslampe und/oder als Leuchtdiode ausgebildet ist.

9. Scheinwerfer (100) nach einem der vorstehenden Ansprüche, **dadurch gekennzeichnet, dass** die Blenden (41, 42, 43) aus Blech bestehen.

## Claims

1. Headlight (100), in particular for a motor vehicle, having a reflector (10), which reflects light emitted by a light source (20), and having a dimming device (40) which, for creating a light-dark threshold (45'), constitutes a dimmer screen contour (45), preferably by projection by means of a lens (50), wherein the dimming device (40) has a least two dimmer screens (41, 42, 43), and wherein one of the dimmer screens (41, 42, 43) can be rotated in relation to the other dimmer screen(s) around an axis of rotation (D) which substantially extends parallel to an optical axis (A') of the headlight (100), and wherein several dimmer screens (41, 42, 43) contribute simultaneously to the formation of the dimmer screen contour (45), **characterized in that** at least one dimmer screen (41, 42, 43), which is rotatable around the axis of rotation (D), has a crank (41', 42', 43'), which is engaged by a crank bolt (31) of a drive mechanism (30), for moving at least one of the dimmer screens (41, 42, 43) which is rotatable around the axis of rotation (D).

2. The headlight (100) in accordance with claim 1, **characterized in that** several dimmer screens (41, 42, 43) can be simultaneously rotated around the axis of rotation (D), wherein cranks (41', 42', 43'), which extend differently from each other, are formed in the rotatable dimmer screens (41, 42, 43).

3. The headlight (100) in accordance with claim 1 or 2, **characterized in that** the dimmer screens (41, 42, 43) are arranged one behind the other in relation to the optical axis (A') of the headlight (100).

4. The headlight (100) in accordance with one of claims 1 to 3, **characterized in that** the drive mechanism (30) is arranged on an exterior surface of the reflector (10).

5. The headlight (100) in accordance with one of claims 1 to 4, **characterized in that** the drive mechanism (30) is designed as an electric motor and/or as an electromagnet.

6. The headlight (100) in accordance with one of claims 1 to 5, **characterized in that** the crank, and/or a geometric shape of the crank bolt (31), are designed as a function of the dimmer screen contours (45) which are to be realized by means of the dimming device (40).

7. The headlight (100) in accordance with one of the preceding claims, **characterized in that** the dimmer screens (41, 42, 43) are shaped differently from each other, in particular in an area which contributes to the formation of the dimmer screen contour (45) of the dimming device (40).

8. The headlight (100) in accordance with one of the preceding claims, **characterized in that** the light source (20) is designed as a halogen lamp, and/or gas discharge lamp, and/or a light-emitting diode.

9. The headlight (100) in accordance with one of the preceding claims, **characterized in that** the dimmer screens (41, 42, 43) are made of sheet metal.

## Revendications

1. Projecteur (100), en particulier pour un véhicule automobile, comportant un réflecteur (10) qui réfléchit la lumière émise par une source lumineuse (20), et comportant un dispositif d'occultation (40) qui, en vue de générer une limite clair/obscur (45'), de préférence par projection au moyen d'une lentille (50), forme un contour d'obturation (45), le dispositif d'occultation (40) comportant au moins deux caches (41, 42, 43), au moins l'un des caches (41, 42, 43) étant apte à tourner par rapport à l'autre ou aux autres cache(s) autour d'un axe de rotation (D) sensiblement parallèle à l'axe optique (A') du projecteur (100), et plusieurs caches (41, 42, 43) contribuant simultanément à la formation du contour d'obturation (45), **caractérisé en ce que** ledit au moins un cache (41, 42, 43), apte à tourner autour de l'axe de rotation (D) comporte une coulisse (41', 42', 43'), dans laquelle s'engage un boulon à manivelle (31) d'un système d'entraînement (30) pour déplacer ledit au moins un cache (41, 42, 43) apte à tourner autour de l'axe de rotation (D).

2. Projecteur (100) selon la revendication 1, **caractérisé en ce que** plusieurs caches (41, 42, 43) peuvent tourner simultanément autour de l'axe de rotation (D), sachant que des coulisses (41', 42', 43') avec des tracés différents les uns des autres sont réalisées dans les caches (41, 42, 43) rotatifs.

3. Projecteur (100) selon la revendication 1 ou 2, **caractérisé en ce que** les caches (41, 42, 43) sont disposés les uns derrière les autres par rapport à l'axe optique (A') du projecteur (100).

4. Projecteur (100) selon l'une quelconque des revendications 1 à 3, **caractérisé en ce que** le système d'entraînement (30) est disposé sur une face extérieure du projecteur (100).

5. Projecteur (100) selon l'une quelconque des revendications 1 à 4, **caractérisé en ce que** le système d'entraînement (30) est réalisé sous la forme d'un moteur électrique et/ou sous la forme d'un électroaimant.

6. Projecteur (100) selon l'une quelconque des revendications 1 à 5, **caractérisé en ce que** la coulisse et/ou une géométrie du boulon à manivelle (31) sont réalisées en fonction des contours d'obturation (45) à réaliser avec le dispositif d'occultation (40).

7. Projecteur (100) selon l'une quelconque des revendications précédentes, **caractérisé en ce que** les caches (41, 42, 43) sont formés chacun différemment, en particulier dans une zone qui contribue à la formation du contour d'obturation (45) du dispositif d'occultation (40).

8. Projecteur (100) selon l'une quelconque des revendications précédentes, **caractérisé en ce que** la source lumineuse (20) est réalisée sous forme de lampe halogène et/ou sous forme de lampe à décharge et/ou sous forme de diode électroluminescente.

9. Projecteur (100) selon l'une quelconque des revendications précédentes, **caractérisé en ce que** les caches (41, 42, 43) sont réalisés en tôle.
